# EUROPEAN PATENT SPECIFICATION

(11) **EP 0 906 247 B1**
(45) Date of publication and mention of the grant of the patent: **17.09.2003**
(21) Application number: 97924116.3
(22) Date of filing: 28.05.1997
(51) Int. Cl.: C02F 3/12, C02F 3/06

(54) **WASTEWATER TREATMENT**
ABWASSERBEHANDLUNG
TRAITEMENT D'EAUX USEES

(30) Priority: 28.05.1996 GB 9611069
(43) Date of publication of application: 07.04.1999
(73) Proprietor: AW Creative Technologies Limited, Huntingdon, Cambridgeshire PE29 3NZ (GB)
(72) Inventor: EVANS, Ian, David, Cambridgeshire CB6 1BG (GB); GREEN, Patrick, Graham, Colchester, Essex CO3 5XY (GB); SUNNER, Narinderjit, Singh, Cambridge CB2 5BB (GB)
(74) Representative: Perry, Robert Edward
(86) International application number: GB9701448
(87) International publication number: WO97045374

(56) References cited:
- EP-A- 0 025 309
- US-A- 4 253 947
- US-A- 5 019 268
- PATENT ABSTRACTS OF JAPAN vol. 017, no. 551 (C-1117), 5 October 1993 & JP 05 154491 A (NIPPON STEEL CORP), 22 June 1993,
- PATENT ABSTRACTS OF JAPAN vol. 017, no. 167 (C-1043), 31 March 1993 & JP 04 326989 A (TOSHIBA CORP), 16 November 1992,
- PATENT ABSTRACTS OF JAPAN vol. 017, no. 232 (C-1056), 12 May 1993 & JP 04 363199 A (TOSHIBA CORP), 16 December 1992,
- PATENT ABSTRACTS OF JAPAN vol. 017, no. 513 (C-1111), 16 September 1993 & JP 05 138185 A (EBARA INFILCO CO LTD;OTHERS: 01), 1 June 1993,

## Description

### Field of the Invention

This invention relates to the treatment of wastewater, and to apparatus for use in such treatment.

### Background of the Invention

It is standard practice to treat wastewater by passage through a sequence of aeration zones, comprising one submerged fixed bed zone at least, for biological treatment, into a settlement zone. For example, there may be 3 or 4 separate compartments each provided with a fixed film bed. A disadvantage of a fixed medium is that only relatively low specific area (e.g. less than 150 m²/m³) may be used in the first zones, due to vigorous biological growth blocking voids in the bed.

### Summary of the Invention

The present invention is based on the discovery that the disadvantage of plugging or obstruction in the fixed bed zone, during biological treatment can be reduced by pre-treatment in a moving bed biofilm reactor (MBBR). In the novel coupling of a MBBR and a fixed bed aeration zone, the MBBR allows a higher flow rate and presents a relatively high surface area, without plugging.

The invention provides effective, economical wastewater and sewage treatment. It is of potential value in new systems and is adaptable to the retrofitting of existing plants which become overloaded and/or where treatment criteria become more stringent. The invention is of particular value where it is necessary or desirable to provide a compact sewage treatment process, which incorporates the main biological and final settlement processes. The increased surface area means that the essential zones can be put in one housing, i.e. packaged to incorporate the major items of plant. Settled sewage is fed into the front of the treatment unit and gravitates through the biological and settlement zones, to provide a treated effluent. Thus, the respective units' treatments are essentially unseen, the combination being provided with simple connections at the inlet and the outlet.

### Description of the Invention

The apparatus and method of this invention may be essentially conventional, in wastewater treatment, except for the MBBR. The MBBR comprises a tank which, in addition to an inlet and an outlet for the sewage under treatment, comprises an inlet for oxygen, e.g. as air, to be introduced under pressure. Within the reactor, a buoyant medium is present, providing surfaces on which microbial growth can occur, encouraging constant oxygen uptake. The MBBR as the first zone discourages the growth of filamentous bacteria, which improves the settlement characteristics of the waste solids. The medium preferably comprises discrete pieces of, say, plastics material, which preferably include an internal surface, such that solids are not removed by attrition between the pieces. An especially suitable material of this type is known as "Kaldnes" medium, and is described in detail in EP-A-0575314.

In itself, Kaldnes medium provides a surface area of, say, 300 m²/m³. By way of example only, a specific area of 500 m²/m³ corresponds to 300 m²/m³ if the zone is filled to 60% of its volume with Kaldnes medium. This effectively increases the surface area capacity of conventional 3 and 4 cell reactors by as much as 37.5% and 27.27% respectively.

The MBBR zone preferably has a sieve positioned at the outlet to prevent loss of the medium into the next zone. Aeration may be provided by sparging or bubble aerators.

In sequence after the MBBR, there may be one, two or more further aeration zones. These may be of conventional, fixed bed, type. Again, aeration may be provided, by means of sparge pipes. Finally, there may be a conventional settlement zone.

Typically, the MBBR is a completely mixed reactor, while the subsequent fixed bed aeration zones involve plug flow. These latter zones may comprise, for example, a structured medium such as Munter's medium. Alternatively, they may comprise a random medium, and this may offer some flexibility in the design of the apparatus.

In one embodiment of the invention, apparatus comprises a combination of a MBBR, a fixed film random medium submerged filter and a lamella settler for the biological treatment of crude and settled sewage for populations of up to 2000. Typically, the containment structure for the process is split into two sections. One section has the MBBR which is essentially Kaldnes medium aerated by sparge pipes; this section also contains the lamella settlers. The other section contains fixed film random medium which is also aerated by sparge pipes. In the overall process, sewage is fed to the MBBR which acts as a roughing stage, then into the fixed film random media submerged filter which acts as a nitrifying stage, and finally into the lamella settlers which separate bacterial solids from biological reactors, to allow final discharge.

The invention will now be described by way of example only, with reference to the accompanying, schematic drawings. Each drawing shows an embodiment of the invention (not to scale).

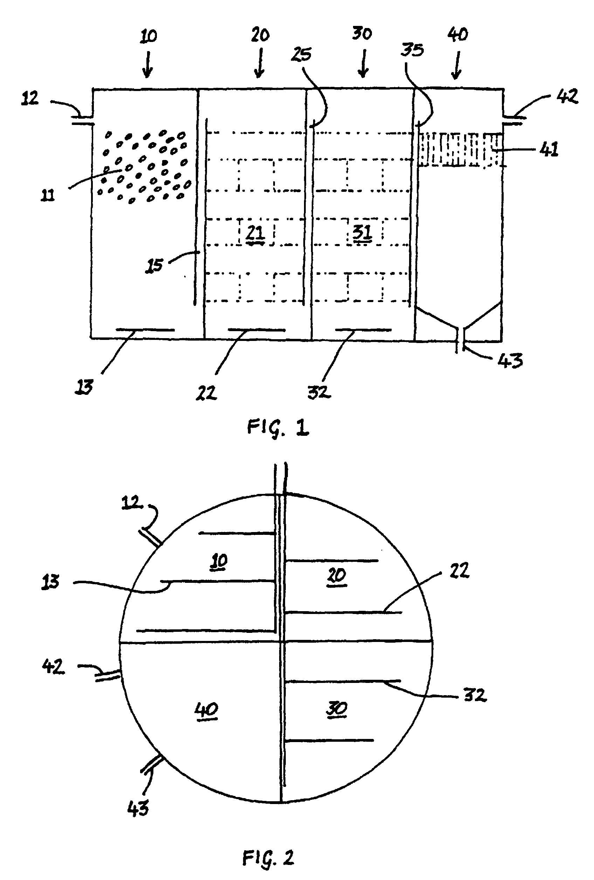

Figure 1 shows apparatus comprising four zones, respectively a MBBR 10 containing Kaldnes medium 11 and having a liquid inlet 12 and aerator 13; two fixed bed aeration zones 20 and 30 containing Munter's medium 21,31 and having air feeds 22 and 32; and a settlement zone 40 including settlement tubes 41, a liquid outlet 42 and a sludge outlet 43. The water flows downwardly in each aeration zone; conduits 15,25,35 are provided for treated water to flow up and into the next zone.

The Kaldnes medium can be loaded up to 10 kg/m³/d, and still provide effective treatment. In normal applications, the first zone will be loaded between 2 and 4 kg BOD/m³/d. Hence, only coarser structured medium (100 m²/m³) can be used in the first zone.

The introduction of Kaldnes medium into the first zone in a unit which only comprises fixed structured medium treating 20 kg BOD/d, and maintaining an effluent quality of 30 mg/l SS, 20 mg/l BOD, will allow it to treat 27 kg BOD/d to the same treatment standard. Varying the percentage fill of the first zone allows the same size treatment unit to be used over a wide range of loadings.

Performance trials have been undertaken on comparable units, one with fixed structured medium only and one with Kaldnes medium introduced into the first zone. At identical loadings, there was an improvement in Ammoniacal Nitrogen removal of up to 21%.

Figure 2 is a schematic representation, in plan sectional view, of an alternative embodiment. This utilises a random medium (not shown) in the zones 20 and 30, thereby allowing the illustrated, compact shape.

## Claims

1. A wastewater treatment system which comprises, in order downstream, a moving bed biofilm reactor zone (10), a fixed bed aeration zone (20 or 30), and a settlement zone (40) having a sludge outlet (43), wherein the reactor, the aeration zones and the settlement zone are side-by-side, and wherein the system is arranged so that the wastewater flows downwardly through the moving bed in the reactor zone and in the aeration zone and flows upwardly between at least the reactor zone and the aeration zone.

2. A system according to claim 1, in which the reactor zone comprises a buoyant medium (11) and a forced oxygen supply (13).

3. A system according to claim 2, in which the medium comprises discrete pieces of plastics material (11) having an internal surface.

4. A system according to any preceding claim, which comprises two fixed bed aeration zones (20,30).

5. A system according to any preceding claim, wherein the fixed bed comprises a structured medium.

6. A system according to any of claims 1 to 4, wherein the fixed bed comprises a random medium.

7. A single unit comprising a system according to any preceding claim, the zones being contiguous.

8. A method for treating wastewater, which comprises passing the wastewater through a system according to any preceding claim, and removing sludge.

## Patentansprüche

1. Abwasserbehandlungssystem, welches in stromabwärtiger Reihenfolge eine Bewegtbett-Biofilmreaktorzone (10), eine Festbett-Belüftungszone (20 oder 30) und eine Absetzzone (40) mit einer Schlammaustrittsöffnung (43) umfasst, worin der Reaktor, die Belüftungszonen und die Absetzzone sich nebeneinander befinden und worin das System so gestaltet ist, dass das Abwasser nach unten durch das Bewegtbett in der Reaktorzone und in der Belüftungszone fließt und zwischen mindestens der Reaktorzone und der Belüftungszone nach oben fließt.

2. System nach Anspruch 1, in welchem die Reaktorzone ein Schwimmmedium (11) und eine Sauerstoffdruckzuführung (13) umfasst.

3. System nach Anspruch 2, in welchem das Medium diskrete Stücke von einem Kunststoffmaterial (11) mit einer Innenoberfläche umfasst.

4. System nach irgendeinem vorhergehenden Anspruch, welches zwei Festbett-Belüftungszonen (20, 30) umfasst.

5. System nach irgendeinem vorhergehenden Anspruch, worin das Festbett ein strukturiertes Medium umfasst.

6. System nach irgendeinem der Ansprüche 1 bis 4, worin das Festbett ein regelloses Medium umfasst.

7. Einzeleinheit umfassend ein System nach irgendeinem vorhergehenden Anspruch, wobei die Zonen angrenzend sind.

8. Verfahren zur Behandlung von Abwasser, welches das Hindurchleiten des Abwassers durch ein System nach irgendeinem vorhergehenden Anspruch und das Entfernen des Schlamms umfasst.

## Revendications

1. Système de traitement d'eau résiduaire qui comprend, dans l'ordre vers l'aval, une zone de réaction à biofilm à lit mobile (10), une zone d'aération à lit fixe (20 ou 30), et une zone de sédimentation (40) ayant une sortie pour boue (43), dans lequel le réacteur, les zones d'aération et la zone de sédimentation sont côte à côte, et dans lequel le système est agencé de manière à ce que l'eau résiduaire s'écoule vers le bas à travers le lit mobile, dans la zone de réaction et dans la zone d'aération, et s'écoule vers le haut entre au moins la zone de réaction et la zone d'aération.

2. Système selon la revendication 1, dans lequel la zone de réaction comprend un milieu de flottabilité (11) et une alimentation forcée (13) en oxygène.

3. Système selon la revendication 2, dans lequel le milieu comprend des morceaux discrets de matière plastique (11) ayant une surface interne.

4. Système selon l'une quelconque des revendications précédentes, qui comprend deux zones d'aération à lit fixe (20, 30).

5. Système selon l'une quelconque des revendications précédentes, dans lequel le lit fixe comprend un milieu structuré.

6. Système selon l'une quelconque des revendications 1 à 4, dans lequel le lit fixe comprend un milieu aléatoire.

7. Unité simple comprenant un système selon l'une quelconque des revendications précédentes, les zones étant contiguës.

8. Procédé de traitement d'eau résiduaire, qui comprend l'étape consistant à faire passer l'eau résiduaire à travers un système selon l'une quelconque des revendications précédentes, et à enlever la boue.
